# FASCICULE DE BREVET EUROPEEN

(11) **EP 0 574 310 B1**
(45) Date de publication et mention de la délivrance du brevet: **10.09.1997**
(21) Numéro de dépôt: 93401470.5
(22) Date de dépôt: 09.06.1993
(51) Int. Cl.: H05B 3/30, H05B 3/06, H05B 3/14, A47J 27/00

(54) **Récipient chauffant, notamment bouilloire, contenant une plaque chauffante**
Kochgefäss, insbesondere ein Kessel, mit einer integrierten Heizplatte
Heating container, in particular a kettle, contaning a heating plate

(30) Priorité: 11.06.1992 FR 9207041
(43) Date de publication de la demande: 15.12.1993
(73) Titulaire: SEB S.A., 69130 Ecully (FR)
(72) Inventeur: Sarrazin, Michel, F-74150 Massingy (FR); Piera, Henri, F-74150 Rumilly (FR)
(74) Mandataire: Keib, Gérard

(56) Documents cités:
- EP-A- 0 222 162
- EP-A- 0 286 216
- EP-A- 0 286 217
- EP-A- 0 381 792
- DE-A- 3 545 442
- FR-A- 1 488 875
- GB-A- 2 153 190
- PATENT ABSTRACTS OF JAPAN vol. 14, no. 299 (C-733)27 Juin 1990 & JP-A-20 98 316

## Description

La présente invention concerne un récipient chauffant, notamment bouilloire contenant une plaque chauffante.

L'invention vise également une bouilloire comportant une telle plaque chauffante.

Les bouilloires connues comportent un récipient destiné à être rempli d'eau à chauffer et renfermant une résistance électrique chauffante sous forme d'élément tubulaire du type blindé.

Cette résistance a une puissance électrique relativement élevée (de l'ordre de 1 000 à 2 000 W) pour permettre une élévation très rapide de la température de l'eau jusqu'à près de 100°C.

Ce type de résistance électrique présente l'inconvénient d'être difficilement nettoyable, de se recouvrir rapidement d'une croûte de calcaire diminuant le rendement du chauffage et susceptible d'absorber des impuretés.

On connaît par ailleurs des plaques chauffantes constituées par une plaque métallique par exemple en acier revêtue d'une couche de composition vitreuse électriquement isolante. Sur cette couche isolante est appliquée une piste résistive composée d'une base vitreuse chargée de particules métalliques et dont les extrémités sont raccordées à une source de courant.

Une telle plaque chauffante n'a jusqu'à ce jour, pas été utilisée dans la construction d'un chauffe-liquides.

L'utilisation d'une telle plaque chauffante dans une bouilloire permettrait de faciliter le nettoyage du fond du récipient à eau et d'éviter le dépôt de calcaire. De plus, le contrôle de la température pourrait être réalisé d'une manière plus simple et plus précise au moyen d'un thermostat en contact direct avec la piste résistive.

Cependant, l'adaptation d'une telle plaque chauffante à un récipient chauffant tel qu'une bouilloire pose des difficultés.

En particulier, il est nécessaire de concentrer sur une surface relativement faible, correspondant au fond de la bouilloire, une puissance de chauffage relativement forte, ce qui pose de sérieux problèmes de surchauffe locale, d'isolation électrique, de fissuration de la couche de composition vitreuse sous l'effet des contraintes thermiques et électriques mises en oeuvre.

Le but de la présente invention est de résoudre les problèmes ci-dessus en proposant une plaque chauffante pouvant s'adapter sans difficultés à un récipient chauffant tel qu'une bouilloire électrique.

On connaît par le document EP-A-0 222 162 des plaques chauffantes pour récipient chauffant, mais dont l'épaisseur d'une couche de verre électriquement isolante est inférieure à 180 µm, ce qui ne permet pas de résister à une tension de claquage supérieure à 1250 V et de présenter un bon pouvoir isolant même en cas de fissuration de la couche de verre.

L'invention vise ainsi un récipient chauffant, notamment pour bouilloire contenant une plaque chauffante comprenant une plaque métallique revêtue d'une couche de composition vitreuse électriquement isolante sur laquelle est appliquée une piste résistive composée d'une base vitreuse chargée de particules métalliques et dont les extrémités sont raccordées à une source de courant.

Suivant l'invention, cette plaque chauffante est caractérisée en ce que l'épaisseur de la couche de composition vitreuse électriquement isolante est comprise entre 300 µm et 400 µm.

Les essais ont en effet permis de constater que lorsque l'épaisseur de la couche de composition vitreuse était comprise dans l'intervalle ci-dessus, celle-ci résistait non seulement à une tension de claquage supérieure à 1250 V imposée par les normes, mais son pouvoir isolant restait encore largement suffisant en cas de fissuration de la couche vitreuse sous l'effet des chocs mécaniques appliqués à la plaque chauffante.

La plaque chauffante s'adapte ainsi parfaitement aux contraintes thermiques et électriques engendrées lors du fonctionnement d'une bouilloire électrique dans laquelle la densité de puissance électrique est égale ou supérieure à 10 W / cm².

Au-delà de la valeur de 400 µm, la sécurité électrique serait encore améliorée, mais la résistance thermique s'accroît d'une manière trop importante, ce qui est nuisible au fonctionnement de l'appareil chauffant.

La plaque métallique est de préférence en acier à bas taux de carbone ou en acier inoxydable.

Les coefficients de dilatation de ces aciers sont supérieurs à celui de la composition vitreuse recouvrant ceux-ci.

Par conséquent, après la cuisson de la couche vitreuse à haute température (de l'ordre de 1 000°C), le refroidissement de la couche vitreuse et de l'acier engendre une compression de la couche vitreuse qui augmente la résistance de ce dernier aux fissurations causées par les chocs mécaniques et les brusques variations de température.

La piste résistive est de préférence appliquée par sérigraphie sur la couche vitreuse électriquement isolante préalablement cuite. On empêche ainsi toute diffusion des particules conductrices , par exemple d'argent, de la piste résistive dans la couche vitreuse isolante, ce qui altérerait les propriétés isolantes de cette dernière.

De préférence, la piste résistive a une épaisseur comprise entre 8 et 30 µm, ce qui lui permet d'avoir un valeur ohmique élevée par unité de surface.

De préférence également, le tracé de la piste résistive a la forme d'une spirale simple ou multiple, qui permet d'obtenir une piste ayant une grande longueur sur une plaque circulaire de surface relativement réduite, sans variation brusque de rayon de courbure.

D'autres particularités et avantages de l'invention apparaîtront encore dans la description qui suit.

Aux dessins annexés, donnés à titre d'exemples non limitatifs :
- la figure 1 est une vue en coupe d'une bouilloire comportant une plaque chauffante conforme à l'invention ;
- la figure 2 est une vue de dessous de la plaque chauffante ;
- la figure 3 est une vue partielle en coupe de la plaque chauffante, au niveau de l'une des connexions électriques de la piste résistive ;
- la figure 4 est une autre vue en coupe partielle de la plaque chauffante ;
- la figure 5 est une vue analogue à la figure 4 schématisant l'effet d'un choc mécanique.

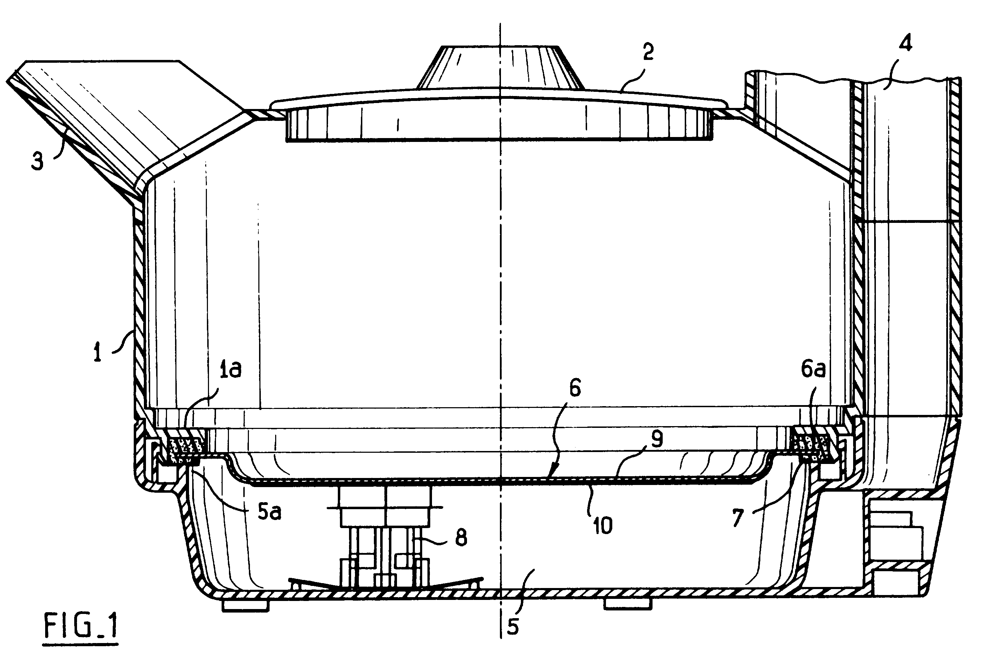

La bouilloire représentée sur la figure 1 comprend un récipient à eau 1, muni d'un couvercle 2, d'un bec verseur 3, d'une poignée 4 (arrachée) et d'un socle 5, l'ensemble étant moulé en matière plastique.

Au fond du récipient 1, au-dessus du socle 5 est placée une plaque chauffante 6 dont la périphérie 6a est engagée dans un joint d'étanchéité 7 encastré entre le bord inférieur la du récipient 1 et le bord supérieur 5a du socle 5.

Entre la plaque chauffante 6 et le fond du socle 5 est placé un bloc 8 de régulation de la température de la plaque chauffante 6.

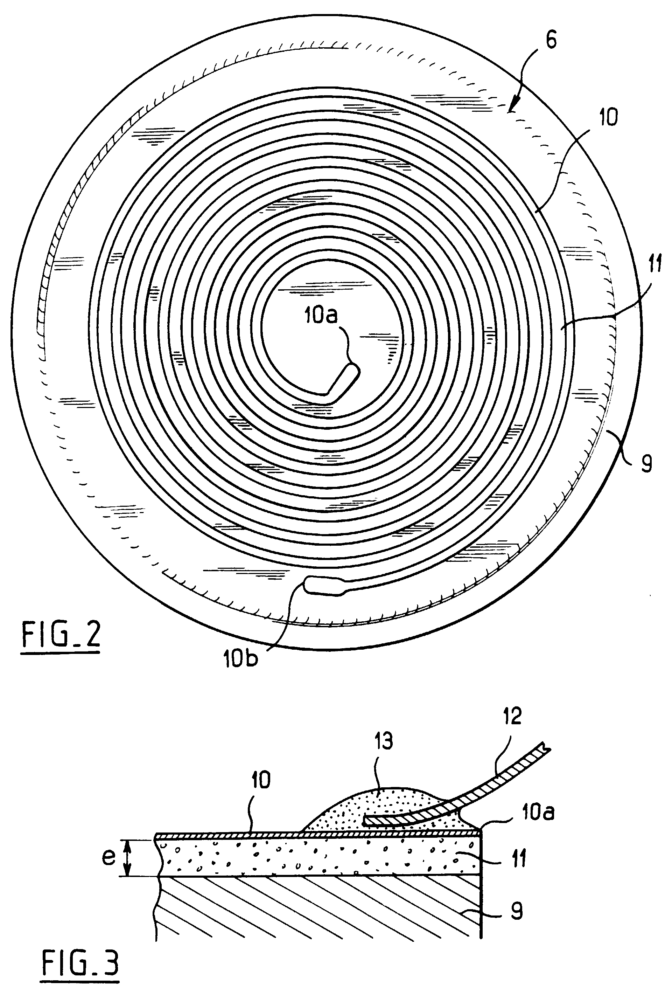

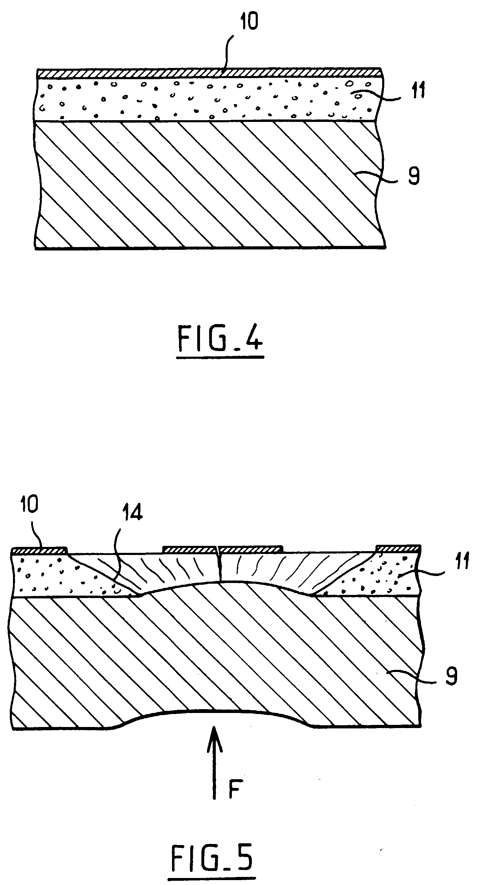

La plaque 6 comprend une plaque métallique 9 revêtue sur sa face adjacente au socle 5 d'une couche de composition vitreuse 11 (voir figures 3 et 4) électriquement isolante, sur laquelle est appliquée une piste résistive 10 (voir figures 2, 3, 4) composée d'une base vitreuse chargée de particules métalliques et dont les extrémités 10a, 10b sont raccordées à une source de courant par une languette en métal 12 ou en fil électrique, telle que représentée sur la figure 3.

Conformément à l'invention, l'épaisseur e de la couche de composition vitreuse électriquement isolante 11 est au moins égale à 300 µm.

De préférence, l'épaisseur de ladite couche de composition vitreuse 11 est de l'ordre de 400 µm.

La plaque métallique 9 est de préférence en acier à bas taux de carbone ou inoxydable.

La couche de composition vitreuse 11 est de préférence réalisée par cuisson d'une composition dépourvue de métaux alcalins et à base d'oxyde de calcium, d'alumine, d'oxyde de bore et de silice.

A titre d'exemple, cette composition est la suivante :

| | |
|---|---|
| CaO | 29 à 34% |
| Al₂O₃ | 7 à 10% |
| B₂O₃ | 43 à 48% |
| SiO₂ | 8 à 15% |
| MgO | 1 à 2% |

La piste résistive 10 est appliquée de préférence par sérigraphie sur la couche vitreuse électriquement isolante 11 préalablement cuite à une température comprise entre 800 et 1 100°C.

La composition vitreuse de la piste résistive 10 est chargée d'environ 50 à 80% de poudre d'argent, ou autre métal conducteur.

La piste résistive 10 a de préférence une épaisseur comprise entre 8 et 30 µm.

De préférence également, la résistance de surface carrée de la piste résistive 10 est comprise entre 10 et 200 milliohms par carré.

La largeur de la piste 10 est avantageusement comprise entre 2 et 4 mm.

Le tracé de la piste résistive 10 doit être dépourvu de zone où le rayon de courbure de cette piste est inférieur à 5 mm.

De préférence, le tracé de la piste résistive 10 a la forme d'une spirale simple, comme montré par la figure 2, ou de spirales multiples en parallèle.

Comme indiqué sur la figure 3, les extrémités 10a, 10b de la piste résistive 10 comprennent des connexions électriques constituées par une languette ou un fil métallique de connexion 12 noyée dans une goutte de résine conductrice 13 déposée sur la piste résistive 10.

Cette résine conductrice 13 est de préférence en silicone ou polyimide et est chargée de poudre d'argent, ou de cuivre, ou de nickel ou de zinc, ou leur mélange.

On va maintenant justifier les avantages techniques de la plaque chauffante que l'on vient de décrire.

La présente invention porte sur les deux caractéristiques essentielles suivantes :
a) Les coefficients de dilatation des différentes couches de revêtement isolant électriquement sont adaptés de telle sorte que ce revêtement soit fortement sous compression.
   Il en résulte, lors de l'application d'un choc (voir flèche F figure 5), un éclatement en forme de cratère très ouvert 14 qui assure une distance importante entre la piste 10 et le support métallique 9.
b) Le revêtement isolant électriquement 11 doit avoir une épaisseur suffisante pour que, même en cas de simple fissure lors d'un choc, la piste électrique 10 soit suffisamment éloignée du support métallique 9 pour que la tension de claquage soit supérieure à la valeur requise par les normes de sécurité.
   Il a été constaté que pour assurer une tension de claquage supérieure à 1250 V, l'épaisseur du revêtement 11 devait être d'au moins 300 µm et de préférence 400 µm.

Au-delà de cette épaisseur, la sécurité électrique est bien sûr améliorée, mais la résistance thermique s'accroit de manière trop importante, ce qui est nuisible au fonctionnement, surtout dans les cas de forte densité de puissance (densité ≥ 10 W/cm²).

Ainsi, pour une densité de puissance de 10 W/cm², une tôle d'acier d'épaisseur 1 mm et un revêtement vitreux d'épaisseur égale à 0,4 mm, la différence de température entre les deux faces est d'environ 35°C.

L'épaisseur de la piste 10 étant comprise entre 8 µm et 30 µm, il est possible de définir pour cette dernière la valeur d'une résistance de surface carrée.

Cette valeur ne doit pas être trop faible, c'est-à-dire qu'elle ne doit pas être inférieure à 10 milliohms/carré, pour que la piste ne soit pas trop longue.

Il a été constaté que des valeurs de résistances carrées trop élevées, supérieures à 200 milliohms/carré causaient une fragilisation de la piste.

En effet, pour de telles valeurs, la résistivité devient trop sensible à la température (coefficient thermique appelé CTR ≥ 2000.10⁻⁶.°C⁻¹).

S'il se produit un échauffement local, il y a alors emballement car la valeur de l'intensité électrique varie peu tandis que la valeur locale de la résistance s'élève, à tel point que la piste peut fondre.

La valeur optimum de résistivité pour les pistes est 50 à 200 milliohms/carré, avec un CTR ≤ 1500.10⁻⁶ .°C⁻¹.

Il a été constaté, lorsque l'intensité électrique est élevée (soit 200 A/mm²), que toute courbure excessive dans le tracé de la piste (rayon de 5 mm par exemple) crée un gradient d'intensité trop important à l'intérieur de la courbe et donc une surchauffe locale qui va endommager la piste.

La forme optimisée de la piste 10 est une spirale car elle permet de placer sur une surface donnée la longueur de piste la plus importante en ayant des rayons de courbure suffisamment grands.

Par ailleurs, la piste 10 doit pouvoir dissiper la puissance thermique générée par effet Joule.

Cette dissipation est favorisée par une diminution de la largeur de la piste 10, mais les imperfections de dessins en bord de piste la rendent d'autant plus fragile que cette piste 10 est étroite.

La largeur optimum qui a ainsi été retenue pour la piste 10 se situe entre 2 et 4 mm.

Les imperfections de dessin en bord de piste sont alors acceptables en regard de la densité de courant élevée, et la puissance thermique est suffisamment bien dissipée.

Une piste en forme de spirale ayant une épaisseur de 10 µm, une largeur de 2,5 mm et représentant 840 carrés, présente une résistance de 26 ohms à 100°C, soit une puissance de 2200 W sous 240 V, répartie sur une surface circulaire de diamètre 130 mm.

La densité de courant sous 240 V est dans ce cas de 370 A/mm².

Une plaque chauffante ainsi conçue est particulièrement adaptée au chauffage d'une bouilloire.

Par rapport aux réalisations connues, cette plaque présente l'avantage d'être facilement nettoyable, ce qui est extrêmement avantageux à l'égard de l'hygiène et du rendement thermique.

De plus, compte tenu de la faible épaisseur de la plaque chauffante, celle-ci se place très aisément à l'intérieur de la bouilloire.

Bien entendu, l'invention n'est pas limitée à l'exemple de réalisation décrit et on peut apporter à celui-ci de nombreuses modifications sans sortir du cadre de l'invention tel que défini par les revendications.

Ainsi, l'invention peut s'appliquer à toute sorte de récipients chauffants autres que la bouilloire.

## Revendications

1. Récipient chauffant, notamment une bouilloire, contenant une plaque chauffante (6) comprenant une plaque métallique (9) revêtue d'une couche de composition vitreuse électriquement isolante (11) sur laquelle est appliquée une piste résistive (10) composée d'une base vitreuse chargée de particules métalliques et dont les extrémités (10a, 10b) sont raccordées à une source de courant, caractérisé en ce que l'épaisseur de la couche de composition vitreuse électriquement isolante (11) est comprise entre 300 µm et 400 µm.

2. Récipient chauffant conforme à la revendication 1, caractérisé en ce que ladite plaque métallique (9) est en acier à bas taux de carbone ou inoxydable.

3. Récipient chauffant conforme à l'une des revendications 1 ou 2, caractérisé en ce que ladite couche de composition vitreuse (11) est réalisée par cuisson d'une composition dépourvue de métaux alcalins et à base d'oxyde de calcium, d'alumine, d'oxyde de bore et de silice.

4. Récipient chauffant conforme à l'une des revendications 1 à 3, caractérisé en ce que la piste résistive (10) est appliquée par sérigraphie sur la couche de composition vitreuse électriquement isolante (11) préalablement cuite.

5. Récipient chauffant conforme à l'une des revendications 1 à 4, caractérisé en ce que la composition vitreuse de la piste résistive (10) est chargée de poudre d'argent.

6. Récipient chauffant conforme à l'une des revendications 1 à 5, caractérisé en ce que la piste résistive (10) a une épaisseur comprise entre 8 et 30 µm.

7. Récipient chauffant conforme à la revendication 6, caractérisé en ce que la résistance de surface carrée de la piste résistive (10) est comprise entre 10 et 200 milliohms par carré.

8. Récipient chauffant conforme à l'une des revendications 6 ou 7, caractérisé en ce que la largeur de la piste (10) est comprise entre 2 et 4 mm.

9. Récipient chauffant conforme à l'une des revendications 6 à 8, caractérisé en ce que le tracé de la piste résistive (10) est dépourvu de zone où le rayon de courbure de cette piste est inférieur à 5 mm.

10. Récipient chauffant conforme à la revendication 9, caractérisé en ce que le tracé de la piste résistive (10) a la forme d'une spirale, ou plusieurs spirales en parallèle.

11. Récipient chauffant conforme à l'une des revendications 1 à 10, caractérisé en ce que les extrémités de la piste résistive (10) comprennent des connexions électriques constituées par une languette ou un fil métallique de connexion (12) noyé dans une goutte de résine conductrice (13) déposée sur la piste résistive (10).

12. Récipient chauffant conforme à la revendication 11, caractérisé en ce que la résine conductrice (13) est en silicone ou polyimide et est chargée de poudre d'argent, ou de cuivre, ou de nickel et / ou de zinc ou leur mélange.

## Patentansprüche

1. Kochgefäß, insbesondere ein Kessel, mit einer Heizplatte (6), die eine Metallplatte (9) umfaßt, welche mit einer elektrisch isolierenden Auflage (11) aus einer glasartigen Zusammensetzung beschichtet ist, auf welcher eine Widerstandsspur (10) aufgebracht ist, die aus einem Metallteilchen enthaltenden, glasartigen Trägermaterial zusammengesetzt ist und deren Enden (10a, 10b) an eine Stromquelle angeschlossen sind, dadurch gekennzeichnet, daß die Dicke der elektrisch isolierenden Auflage (11) aus einer glasartigen Zusammensetzung zwischen 300 µm und 400 µm beträgt.

2. Kochgefäß nach Anspruch 1, dadurch gekennzeichnet, daß die Metallplatte (9) aus kohlenstoffarmem oder nichtrostendem Stahl ist.

3. Kochgefäß nach einem der Ansprüche 1 oder 2, dadurch gekennzeichnet, daß die Auflage (11) aus einer glasartigen Zusammensetzung durch Brennen einer alkalimetallfreien und auf Kalziumoxid, Aluminiumoxid, Boroxid und Kieselerde basierenden Zusammensetzung erzeugt ist.

4. Kochgefäß nach einem der Ansprüche 1 bis 3, dadurch gekennzeichnet, daß die Widerstandsspur (10) mittels Serigraphie auf die vorher gebrannte, elektrisch isolierende Auflage (11) aus einer glasartigen Zusammensetzung aufgebracht ist.

5. Kochgefäß nach einem der Ansprüche 1 bis 4, dadurch gekennzeichnet, daß die glasartige Zusammensetzung der Widerstandsspur (10) Silberpulver enthält.

6. Kochgefäß nach einem der Ansprüche 1 bis 5, dadurch gekennzeichnet, daß die Widerstandsspur (10) zwischen 8 und 30 µm aufweist.

7. Kochgefäß nach Anspruch 6, dadurch gekennzeichnet, daß der Widerstand eines Flächenqudrats der Widerstandsspur (10) zwischen 10 und 200 Milliohm pro Quadrat liegt.

8. Kochgefäß nach einem der Ansprüche 6 oder 7, dadurch gekennzeichnet, daß die Breite der Spur (10) zwischen 2 und 4 mm liegt.

9. Kochgefäß nach einem der Ansprüche 6 bis 8, dadurch gekennzeichnet, daß der Verlauf der Widerstandsspur (10) von dem Bereich ausgenommen ist, in welchem der Krümmungsradius dieser Spur unter 5 mm beträgt.

10. Kochgefäß nach Anspruch 9, dadurch gekennzeichnet, daß der Verlauf der Widerstandsspur (10) die Form einer Schraubenlinie oder mehrerer paralleler Schraubenlinien hat.

11. Kochgefäß nach einem der Ansprüche 1 bis 10, dadurch gekennzeichnet, daß die Enden der Widerstandsspur (10) elektrische Anschlüsse umfassen, die durch ein zungenförmiges oder drahtförmiges, metallisches Anschlußelement (12) gebildet werden, das in einen auf der Widerstandsspur (10) abgesetzten Tropfen (13) aus leitfähigem Harz eingebettet ist.

12. Kochgefäß nach Anspruch 11, dadurch gekennzeichnet, daß das leitfähige Harz (13) aus Silicon oder Polyimid besteht und Pulver von Silber oder Kupfer oder Nickel und/oder Zink oder einem Gemisch davon enthält.

## Claims

1. A heating container, inter alia a kettle, containing a heating plate (6) comprising a metal plate (9) coated with an electrically insulating vitreous composition layer (11) to which there is applied a resistive track (10) composed of a vitreous base filled with metal particles and the ends (10a, 10b) of which are connected to a current supply, characterised in that the thickness of the electrically insulating vitreous composition layer (11) is between 300 µm and 400 µm.

2. A heating container according to claim 1, characterised in that the said metal plate (9) is of stainless steel or low carbon content steel.

3. A heating container according to claim 1 or 2, characterised in that the said vitreous composition layer (11) is made by firing a composition devoid of alkali metals and based on calcium oxide, alumina, boron oxide and silica.

4. A heating container according to any one of claims 1 to 3, characterised in that the resistive track (10) is applied by silk-screen printing to the electrically insulating vitreous composition layer (11) after the latter has been fired.

5. A heating container according to any one of claims 1 to 4, characterised in that the vitreous composition of the resistive track (10) is filled with silver powder.

6. A heating container according to any one of claims 1 to 5, characterised in that the resistive track (10) has a thickness of between 8 and 30 µm.

7. A heating container according to claim 6, characterised in that the resistance of the resistive track (10) per unit area is between 10 and 200 milliohms per unit area.

8. A heating container according to claim 6 or 7, characterised in that the width of the track (10) is between 2 and 4 mm.

9. A heating container according to any one of claims 6 to 8, characterised in that the configuration of the resistive track (10) has no zone in which the radius of curvature of said track is less than 5 mm.

10. A heating container according to claim 9, characterised in that the configuration of the resistive track (10) is in the form of a spiral or a plurality of spirals in parallel.

11. A heating container according to any one of claims 1 to 10, characterised in that the ends of the resistive track (10) comprise electrical connections formed by a connecting tag or metal wire (12) embedded in a conductive resin bead (13) deposited on the resistive track (10).

12. A heating container according to claim 11, characterised in that the conductive resin (13) is of silicone or polyimide and is filled with silver, copper, nickel and/or zinc powder or a mixture thereof.
